# EUROPEAN PATENT APPLICATION

(11) **EP 2 647 533 A2**
(43) Date of publication of application: **09.10.2013**
(21) Application number: 13382076.1
(22) Date of filing: 07.03.2013
(51) Int. Cl.: B60T 7/10, B60T 11/04, G05G 23/02

(54) **Automatic cable tensioning device suitable for parking brakes and parking brake with the automatic tensioning device**

(30) Priority: 04.04.2012 ES 201230523
(71) Applicant: Batz, S.Coop., 48140 Igorre (ES)
(72) Inventor: Burguera Albizuri, Fernando, 48014 BILBAO (ES)
(74) Representative: Igartua, Ismael

(57) **Abstract**

The present invention is related to an automatic tensioning device for parking brakes comprising a support (20,40), a first regulating element (11), and a second regulating element (30) movable with respect to the support (20,40) between a rest position and a block position. The second regulating element (30) comprises an inner thread (34), a first stop surface (37) for contacting the support (20,40), and at least one stop (38) for contacting the support (20,40) and/or the first regulating element (11). In the rest position, the first regulating element (11) is moved with respect to the second regulating element (30) by means of rotation of the second regulating element (30) when the first stop surface (37) contacts a first stop surface (42) of the support (20,40). In the block position, the stop (38) blocks the rotation with respect to the first regulating element (11). The present invention is also related to a parking brake with the automatic tensioning device.

## Description

### TECHNICAL FIELD

The present invention is related to an automatic cable tensioning device particularly suitable for parking brakes. On the other hand, it is also related to a parking brake comprising the automatic tensioning device.

### PRIOR ART

Cable tensioning devices suitable for parking brakes intended for maintaining the tension of the brake cables that will be connected to the brakes of the corresponding motor vehicle are known. The devices comprise automatically adjustable regulating means for adjusting the tension such that if the brake cable loses tension in a rest position of the parking brake, the automatic tensioning device acts on the cable tensioning it, if necessary.

US2009/0314122 describes a parking brake comprising a tensioning device. The tensioning device comprises a toothed bar which is fixed at one end to a brake cable of the motor vehicle, elastic means acting on the toothed bar moving it when the cable loses tension, and a pawl which engages the toothed bar preventing the toothed bar from moving in a direction that reduces tension in the brake cable.

ES2160537B1 describes a tensioning device comprising a toothed bar having a circular section which is fixed at one end to a brake cable of the motor vehicle, elastic means acting on the toothed bar moving it when the cable loses tension, two wedged side parts and a support housing the two wedged side parts therein. The wedged parts comprise teeth, being arranged surrounding the toothed bar. The elastic means act on the wedged side parts blocking the movement of the bar towards the direction opposite the elastic means.

Finally, WO2009/127047A1 describes a self-adjusting device including a toothed bar which is fixed at one end to a brake cable of the motor vehicle, elastic means acting on the toothed bar moving it when the cable loses tension, an engagement element engaging the bar blocking the movement of the bar in a block position and releasing the bar in an unblock position, allowing cable tension adjustment. The elastic means act on the engagement element so that it engages the bar and blocks the axial movement of said bar.

### DISCLOSURE OF THE INVENTION

The object of the invention is to provide an automatic cable tensioning device suitable for parking brakes and a parking brake with the automatic tensioning device according to the claims.

The automatic cable tensioning device comprises a support suitable for being coupled to a parking brake lever, a first regulating element suitable for being coupled to the cable, elastic means suitable for regulating the tension of the cable which act on the first regulating element, a second regulating element which is housed in the support being moved with respect to the support between a rest position where a relative movement between both regulating elements occurs for tensioning the cable and a block position where the second regulating element blocks the relative movement between both regulating elements.

The first regulating element comprises an outer thread traversing the second regulating element, whereas the second regulating element comprises an inner thread and a first contact surface. The inner thread cooperates with the outer thread of the first regulating element to move, from the rest position, the first regulating element with respect to the second regulating element towards the elastic means by means of rotation of the second regulating element when the first contact surface of the second regulating element is in contact with a first contact surface of the support. On the other hand, the stop of the second regulating element blocks the rotation of the second regulating element with respect to the first regulating element in the block position of the automatic tensioning device. The first regulating element is thus prevented from moving with respect to the second regulating element, the tension of the corresponding brake cable being reduced.

The self-tensioning device obtained is a compact device that is easy to maintain and assemble, and optimized in terms of the number of necessary elements. Additionally, the elements integrated in the device are less complex and easy to produce, so the cost of the assembly is also lower and more competitive compared with other known systems.

These and other advantages and features of the invention will become evident in view of the drawings and the detailed description of the invention.

### DESCRIPTION OF THE DRAWINGS

Figure 1 shows a perspective view of a parking brake with an automatic cable tensioning device according to the invention in a block position.
Figure 2 shows an exploded view of the parking brake shown in Figure 1.
Figure 3 is a section view of the parking brake shown in Figure 1.
Figure 4 is an exploded view of the automatic tensioning device shown in Figure 1 without the unblocking means.
Figure 5 is another exploded view of the automatic tensioning device shown in Figure 1 without the unblocking means.
Figure 6 is a section view of the automatic tensioning device shown in Figure 1 in a rest position.
Figure 7 is a section view of the automatic tensioning device shown in Figure 1 in the block position.
Figure 8 is a longitudinal section view of the automatic tensioning device shown in Figure 1 in the block position.
Figure 9 is a longitudinal section view of a second embodiment of the automatic tensioning device according to the invention in the block position.
Figure 10 is a longitudinal section view of a third embodiment of the automatic tensioning device according to the invention in the block position.
Figure 11 is a detail perspective view of the parking brake with the automatic tensioning device shown in Figure 1, wherein the unblocking means are shown.
Figure 12 is an exploded view of the unblocking means shown in Figure 1.
Figure 13 is a section view of the automatic tensioning device shown in Figure 1 with the unblocking means shown in Figure 10 in a safety position.

### DETAILED DISCLOSURE OF THE INVENTION

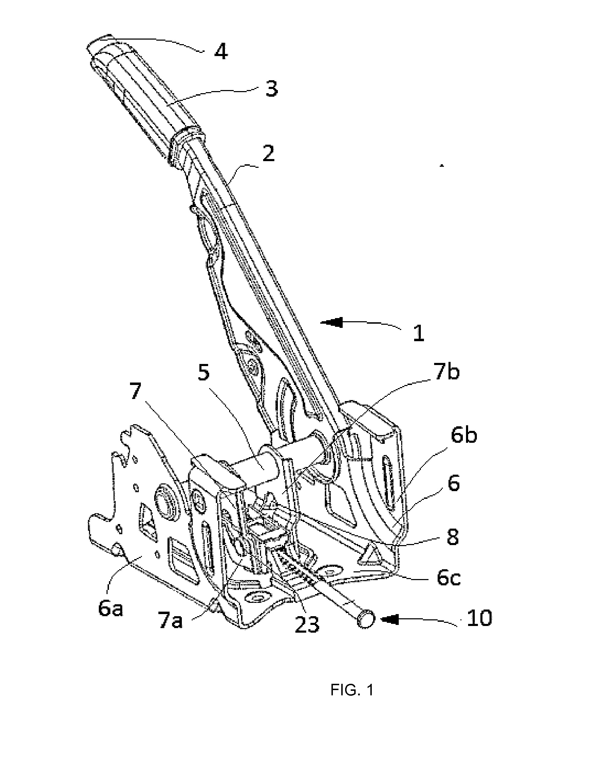

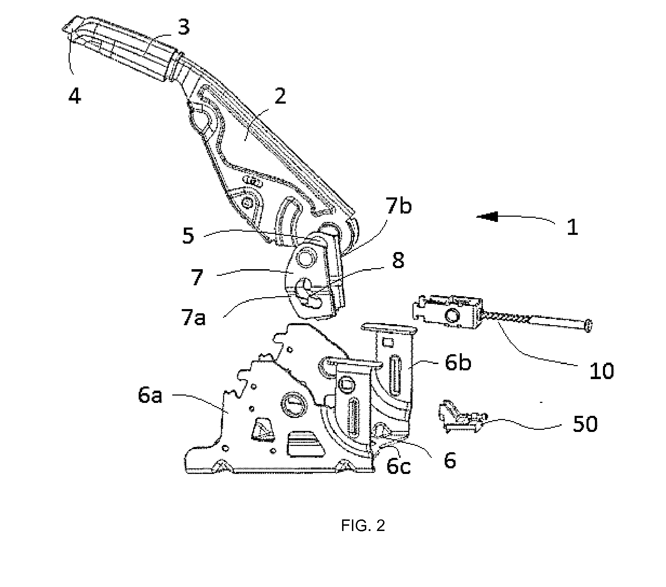

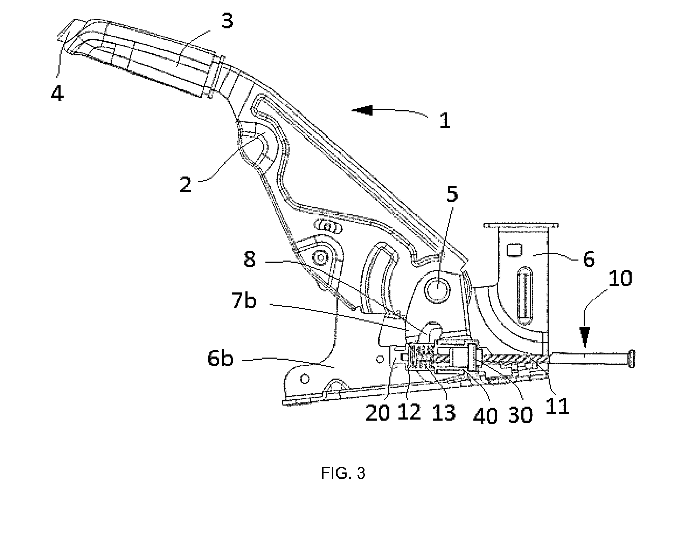

Figures 1 to 3 shows a parking brake 1 suitable for motor vehicles comprising an automatic cable tensioning device 10 according to the invention. The parking brake 1 comprises a support 6 suitable for being fixed to the motor vehicle, a lever 2 rotatably coupled to the support 6, and the automatic cable tensioning device 10 suitable for automatically tensioning a cable, not depicted, that can be connected to the brakes of the motor vehicle. The support 6 comprises side walls 6a,6b arranged substantially parallel to one another and as continuations of a base 6c, the lever 2 being coupled to the side walls 6a,6b of the support 6 through a shaft 5.

On the other hand, the parking brake 1 comprises an auxiliary support 7 comprising walls 7a,7b arranged substantially parallel to one another, which are integrally attached to one another and to the lever 2 through the shaft 5. The automatic cable tensioning device 10 is arranged between the two walls 7a,7b of the auxiliary support 7, coupled to said walls 7a,7b. Furthermore, each wall 7a,7b of the auxiliary support 7 comprises a closed groove 8 necessary for assembling and positioning said automatic tensioning device 10 on the auxiliary support 7.

Furthermore, the lever 2 is coupled to the shaft 5 at one end and comprises at the other end a grip 3 through which the driver grasps the parking brake 1 and an unblocking button 4 which the driver must press to go from a block position, also referred to as an activated parking brake position, shown in Figures 1 to 3, to a rest position in which the parking brake 1 is not activated. The mechanisms which allow maintaining the lever 2 in the block position are known in the state of the art so they will not be described in this description.

In the embodiments shown in the drawings, the automatic tensioning device 10 comprises a support 20,40 suitable for being coupled to the auxiliary support 6, a first regulating element 11 suitable for being coupled to the brake cable, elastic means 13 suitable for adjusting the tension of the cable in the rest position, and a second regulating element 30 which is housed in the support 20,40 and moved with respect to said support 20,40 between the rest position and the block position. Therefore, in the rest position, a relative movement between both regulating elements 11,30 occurs for tensioning the cable, whereas in the block position, the second regulating element 30 in collaboration with the support 20,40 blocks the relative movement between both regulating elements 11,30.

The first regulating element 11 traverses the support 20,40, the second regulating element 30 as well as the elastic means 13 being coupled to said elastic means 13 through a support element 12. The first regulating element 11 comprises an outer thread 11c traversing at least the second regulating element 30. The outer thread 11c is a trapezoidal thread. The trapezoidal thread must have a wide enough thread pitch so as to assure that the thread is not irreversible in any case, therefore assuring that said first regulating element 11 can move freely, rotating the second regulating element 30 in the housing thereof without impediments, when the elastic means 13 pull the first regulating element 11. In the embodiments shown, the thread pitch is approximately equal to the diameter of the regulating element 11, with a thread angle of approximately 45°. Furthermore, the first regulating element 11 has a substantially cylindrical geometry and comprises, in addition to the outer thread 11c, a first end 11a which is inserted into a substantially cylindrical projection 12b of the support element 12, and a second end 11 b suitable for being fixed to the brake cable, not depicted, and transmitting the tension to the corresponding brakes of the motor vehicle.

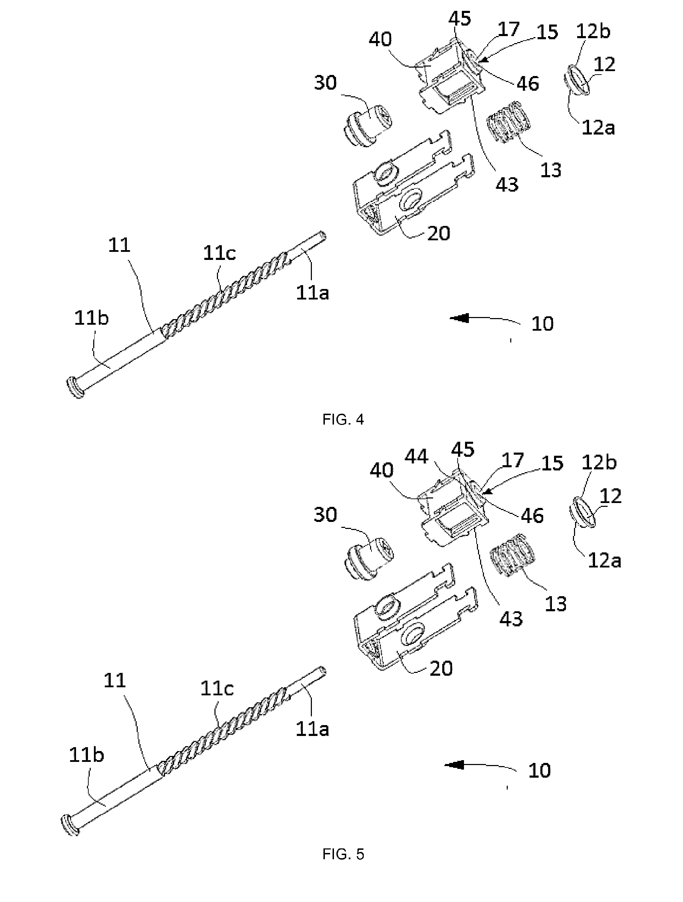

On the other hand, the elastic means 13 comprise a tension spring, although any other type of elastic means may be used in other embodiments. The elastic means 13 are supported in the support 40 and in a seat 12a of the support element 12, shown in Figures 4 and 5, tensioned against the support 40 due to the action of the first regulating element 11. In the second and third embodiments of the automatic tensioning device 10, the elastic means 13 are also supported in the seat, not shown, tensioned against the support 40 due to the action of the first regulating element 11.

On the other hand, the support 20,40 comprises a first component 20 which is coupled to the lever 2 and a second support 40 fixed to the first component 20. The first component 20 comprises two arms 22 substantially parallel to one another attached through a base 25, configuring a substantially U-shaped part. The first component 20 comprises projections 23, each of which projects from one of the arms 22 being coupled in the corresponding groove 8 of the auxiliary support 7 of the parking brake 1. Furthermore, the first component 20 comprises a hole 24 in the base 25 through which the first regulating element 11 traverse the first component 20.

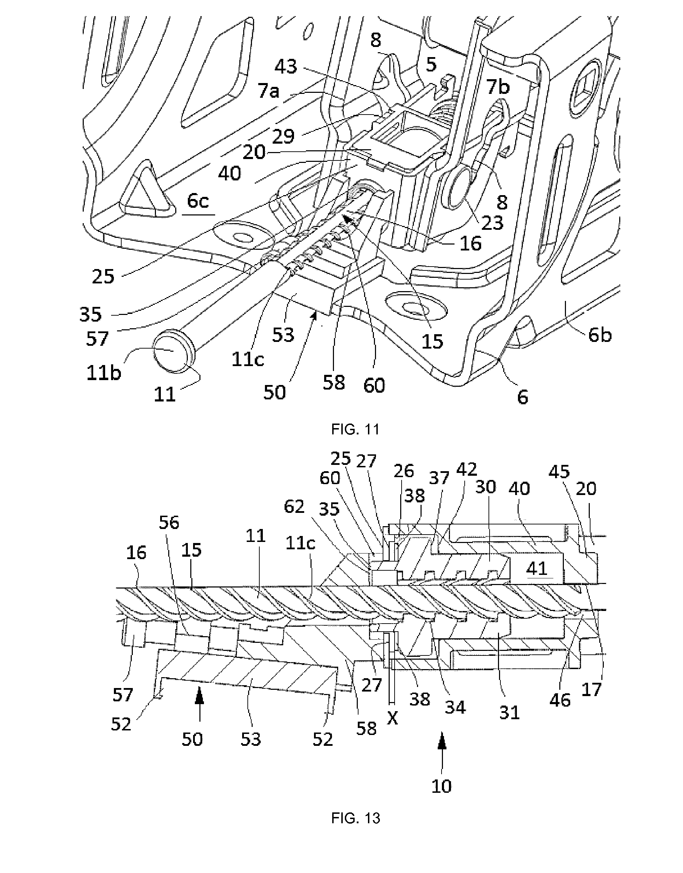

The second component 40 has a substantially prismatic geometry and is housed inside the first component 20, being fixed to the first support 20 by means of clamping through flanges 29 projecting from each side surface 22 of the first component 20. The flanges 29 are inserted into notches 43 comprised in the second component 40, as is shown in Figure 11.

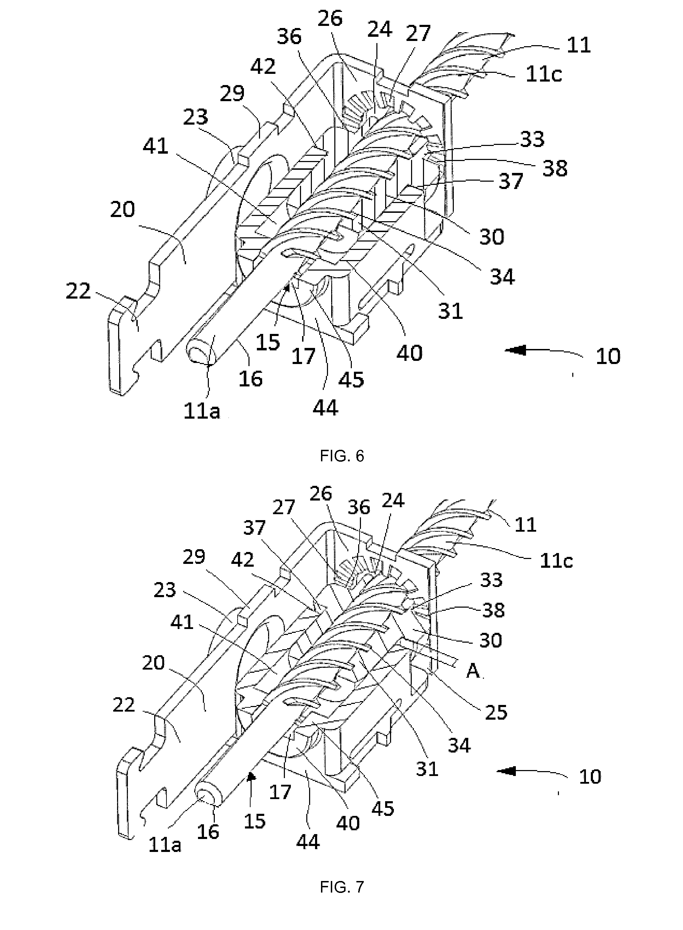

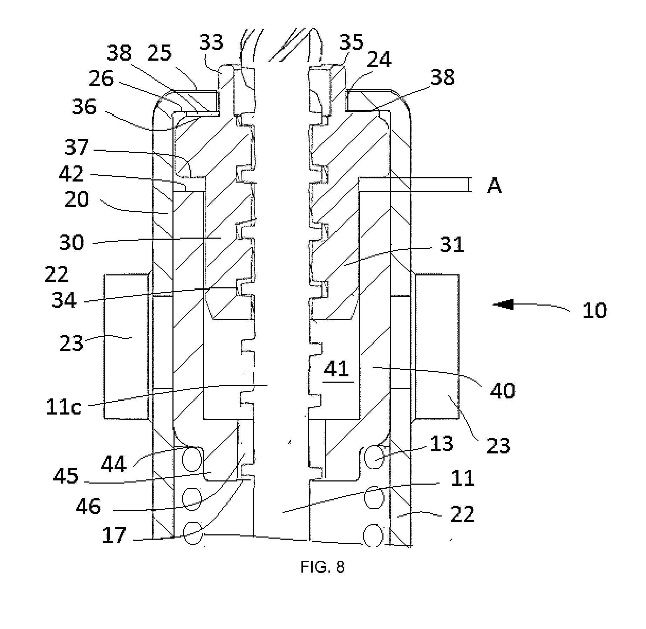

The second component 40 comprises a cavity 41 partially housing the second regulating element 30 therein, said element being moved in a guided manner in said cavity 41. The cavity 41 has a substantially cylindrical geometry. On the other hand, the second component 40 comprises a support surface 44, shown in Figures 4 to 10, arranged substantially orthogonal to the cavity 41 on which there sit the elastic means 13 and a first stop surface 42, shown in Figures 6 to 10, with which the second regulating element 30 contacts in the rest position, the first stop surface 42 being arranged substantially parallel to the support surface 44. The first stop surface 42 and the support surface 44 delimitate the cavity 41. A substantially cylindrical projection 45, shown in Figures 4 and 13, on which the spring 13 is inserted extends in a substantially orthogonal manner from the support surface 44. The projection 45 comprises a hole 46 through which the first regulating element 11 passes through the second component 40.

On the other hand, the second regulating element 30 comprises an inner thread 34;34', a first stop surface 37 for contacting the support 20,40 in the rest position, and at least one stop 38;36';36",34' for blocking the movement of the first regulating element 11 with respect to the second regulating element 30 in the block position. The inner thread 34;34' of the second regulating element 30 cooperates with the outer thread 11c of the first regulating element 11 to move, in the rest position, the first regulating element 11 with respect to the second regulating element 30 towards the elastic means 13 by means of rotation of the second regulating element 30 when the first stop surface 37 of the second regulating element 30 is arranged in contact with the first stop surface 42 of the second component 40 of the support 20,40.

The second regulating element 30 has a substantially cylindrical geometry, one of the ends 31 of which is housed inside the cavity 41 of the second component 40 of the support 20,40 whereas the other end 33 at least partially passes through the base 25 of the first component 20 of the support 20,40 through the hole 24. The first stop surface 37 is substantially orthogonal to said second regulating element 30. The first stop surfaces 37,42 are substantially planar surfaces. Furthermore, the first stop surfaces 37,40 have a minimum relative coefficient of friction of approximately 0.20 which allows the second regulating element 30 to rotate with respect to the support 20,40 with minimal resistance due to friction.

The required coefficient of friction depends on the thread pitch and angle of the respective thread elements 11c; 34; 11c; 34' of the regulating elements 11,30 used in each embodiment. If said thread pitch and angle are large, for example, a thread angle greater than approximately 45°, the axial tension generated by the elastic means 13 in the first regulating element 11 in turn causes an elevated rotating reaction in the thread 34; 34' of the second regulating element 30. Said elevated rotating reaction can rotate the second regulating element 30 when it overcomes the frictional forces which normally prevent said rotation, even though said frictional forces are relatively elevated. In contrast, if the thread pitch and angle are small, such as a thread angle less than approximately 45°, for example, the rotating reaction produced is small, so in order to assure the free rotating movement of the second regulating element 30, low frictional force must be assured by means of a low coefficient of friction between the moving contacting surfaces.

In the rest position in which the brake cable is not subjected to a load, in the event that said cable has been loosened and tension lost, the elastic means 13 pull the first regulating element 11 towards said elastic means 13, the second regulating element 30 being initially moved axially together with the first regulating element 11 until the first contact surface 37 of the second regulating element 30 contacts the first contact surface 42 of the support 20,40. After said moment, the second regulating element 30 rotates freely in one direction with respect to the first regulating element 11, moving said first regulating element 11 towards the elastic means 13 until the forces of the elastic means 13 are balanced with the reaction forces in the brake cable.

The first regulating element 11 does not rotate with respect to the second regulating element 30, nor with respect to the support 20,40, however, it can move with respect to the support 20,40. To prevent the rotation, the automatic tensioning device 10 comprises blocking means 15. The blocking means 15, shown in Figures 4 to 7 and 13, comprise in the first regulating element 11, a first substantially planar face 16 extending longitudinally from at least the first end 11a of the first regulating element 11,11' and a second substantially planar face 17 in the second component 40 delimiting the hole 46 of the projection 45 of the second component 40, the faces 16,17 being arranged facing one another, blocking any attempt of rotation of the first regulating element 11 with respect to the second component 40 and therefore with respect to the first component 20 of the support 20,40.

On the other hand, when the driver operates the lever 2 for braking, the force exerted by the cable is greater than the reaction force of the elastic means 13 so the first regulating element 11 is moved axially, driving the second regulating element 30 until it contacts the stop 38;36';36",34" which blocks the movement of the second regulating element 30, the second regulating element 30 thus being prevented from rotating in an opposite direction, reducing the tension of the brake cable. The second regulating element 30 is moved axially a distance A, shown in Figures 7 to 10, with respect to the support 20,40 until the stop 38;36';36",34" blocks the movement thereof, said movement being perceived by the driver as a force-free or tension-free movement in the lever 2. This movement is at most approximately 1.0 mm. In a preferred embodiment, said movement is at most approximately 0.5 mm.

In the first embodiment shown in detail in Figures 6 to 8, the second regulating element 30 comprises a plurality of stops 38 projecting axially from a surface 36, arranged facing the base 25 of the first component 20 of the support 20,40. The stops 38 are radially distributed. The first component 20 of the support 20,40 in turn comprises axially extending notches 27 in an inner surface 26 of the base 25. The notches 27 are radially distributed and cooperate with the respective stops 38, each of which is housed in the respective notch 27 blocking the rotation of the second regulating element 30 with respect to the support 20,40. The second regulating element 30 thus collaborates with the support 20,40 to block the movement of the first regulating element 11 with respect to said support 20,40, preventing the reduction of tension of the brake cable.

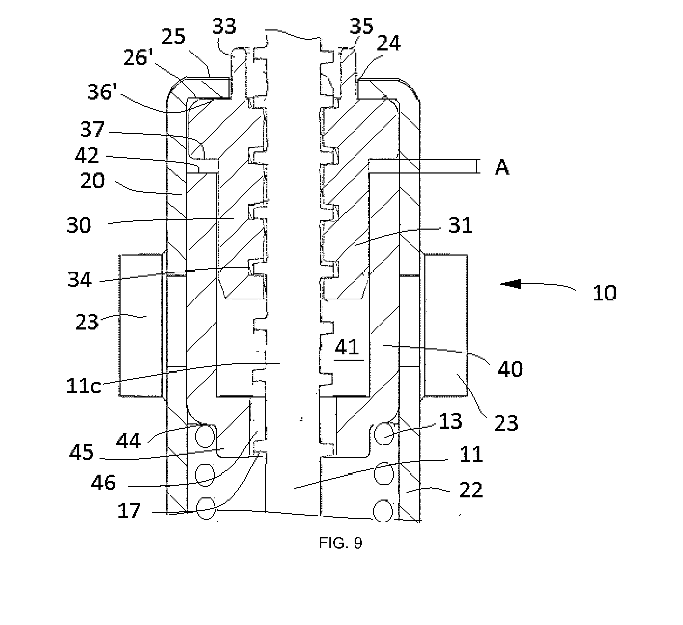

In the second embodiment of the automatic tensioning device 10, shown in Figure 9, the second regulating element 30 comprises a stop 36' which is arranged facing the base 25 of the first component 20. The stop 36' is substantially planar. In the block position, the stop 36' abuts against an inner surface 26' of the base 25 of the first component 20 of the support 20,40, blocking the axial movement of the second regulating element 30 with respect to the support 20,40. Both the stop 36' and the inner surface 26' of the base 25 are arranged substantially parallel to one another, and substantially parallel to the first stop surfaces 37,42. Furthermore, the stop 36' and the inner surface 26' have a high relative coefficient of friction between both surfaces of at least approximately 1.0, such that it blocks the rotation of the second regulating element 30 with respect to the support 20,40, as well as the relative movement between both elements, preventing the first regulating element 11 from moving with respect to the second regulating element 30, the tension of the brake cable being reduced.

As disclosed above, the required coefficient of friction depends on the thread angle and on the thread pitch of the outer thread 11c of the first regulating element 11 and of the inner thread 34 of the second regulating element 30 used in each embodiment.

Both in the first embodiment shown in Figures 6 to 8 and in the second embodiment shown in Figure 9, the inner thread 34 of the respective second regulating element 30 and the outer thread 11c of the first regulating element 11 are symmetrical threads, respectively, with respect to a respective transverse plane.

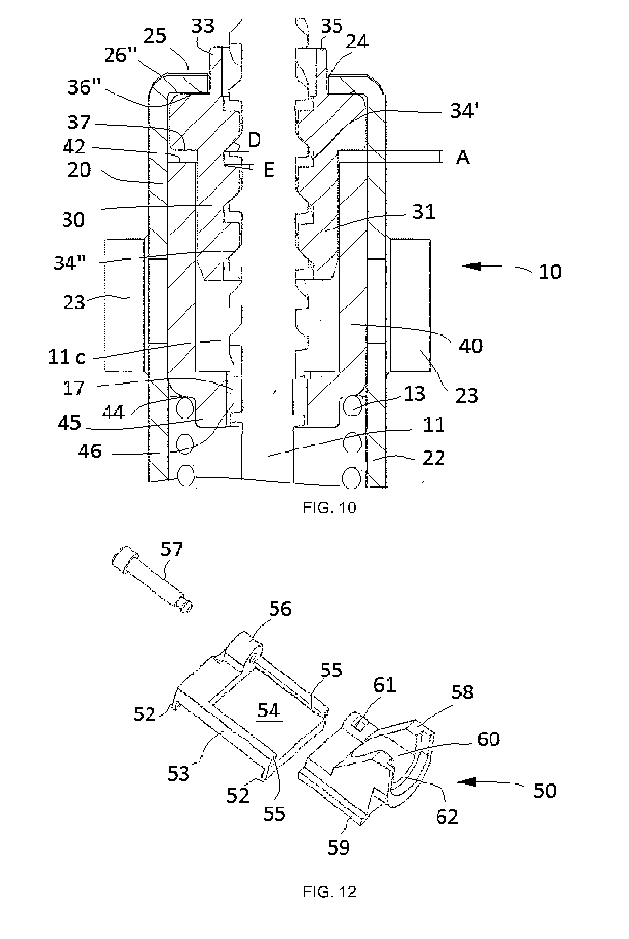

In a third embodiment of the automatic tensioning device 10 shown in Figure 10, the second regulating element 30 comprises a first stop 34" in the inner thread 34'. In this embodiment, the outer thread 11c of the first regulating element 11 and the inner thread 34' of the second regulating element 30 are asymmetrical threads. The angle D of a first flank of the thread must be wide, of at least approximately 45°, the stop 34" being a delimiting surface of the first flank. On the other hand, the angle E of a second flank must be as close to 0° as possible. In the block position, the outer thread 11c thus contacts the stop 34", generating a large friction on the contacting surface and thereby blocking the rotation of the second regulating element 30. Furthermore, the second regulating element 30 comprises a second stop 36" suitable for abutting against the inner surface 26" of the base 25 of the first component 20 of the support 20,40, blocking the axial movement of the second regulating element 30 with respect to the support 20,40. The friction between the inner surface 26" and the second stop 36" contributes to preventing the movement of the first regulating element 11 with respect to the second regulating element 30 as it prevents said second regulating element 30 from rotating freely. The second stop 36" and the inner surface 26" of the base 25 are arranged substantially parallel to one another and substantially parallel to the first stop surfaces 37,42.

On the other hand, the parking brake 1 comprises unblocking means 50, shown in Figures 10 to 13, assuring that the automatic tensioning device 10 is released every time it returns to the rest position. The unblocking means 10 are common in the embodiments shown. The unblocking means 50 prevent the brake cable from automatically tensioning erroneously under extreme circumstances of cold, dirtiness, etc., forcing the second regulating element 30 to unblock when the lever 2 goes back to the rest position.

Therefore, the unblocking means 50 are suitable for being fixed to the support 6 of the parking brake 1 and for acting on the second regulating element 30 in the rest position, longitudinally moving it with respect to the first regulating element 11.

The unblocking means 50, shown in detail in Figure 11, comprise a fixed base 53 suitable for being fixed to the support 6 of the parking brake 1, particularly to the base 6c of said support 6, a moving base 58 which is moved in a guided manner with respect to the fixed base 53, and an adjustment screw 57 suitable for positioning the moving base 58 such that when the automatic tensioning device 10 is in the rest position, the moving base 58 acts on the second regulating element 30 forcing the movement of the second regulating element 30 with respect to the support 20,40 to a safety position shown in Figure 13.

The fixed base 53, shown in detail in Figure 12, comprises a substantially planar surface 54 on which the moving base 58 is supported and moves, and inner guides 55 collaborating with outer guides 59 of the moving base 58 for the guided movement of the moving base 58 with respect to the fixed base 53. The fixed base 53 further comprises a coupling 56 for the adjustment screw 57 and flanges 52 which retain the fixed base 53 against the support 6 of the parking brake 1.

The moving base 58 comprises a housing 60 extending in the direction of movement of the moving base 58 with respect to the fixed base 53, the first regulating element 11 being housed in said housing 60. Furthermore, the moving base 58 comprises a substantially planar thrust surface 62 suitable for thrusting the unblocking surface 35 of the second regulating element 30, moving said second regulating element 30 towards the elastic means 13. The moving base 58 hits against the substantially orthogonal unblocking surface 35. The thrust surface 62 is arranged substantially orthogonal to the first regulating element 11 and substantially parallel to the unblocking surface 35. The thrust surface 62 has a substantially U-shaped cross-section.

On the other hand, the moving base 58 comprises a threaded housing 61 for the adjustment screw 57, such that when the operator rotates the adjustment screw 57, the moving base 58 is moved with respect to the fixed base 53. The distance between the unblocking surface 35 and the thrust surface 62 in the rest position can vary significantly due to manufacturing and assembly tolerances. The adjustment screw 57 minimizes said distance by absorbing the tolerances, given that it allows adjusting the position of the moving base 58 with respect to the second regulating element 30 at the end of the assembly process. The described blocking means 50 act on any of the embodiments of the automatic tensioning device 10 described above.

Finally, as described above, there is a transition between the rest position and the block position during which the second regulating element 30 is moved axially a distance A, shown in Figures 7 to 10, together with the first regulating element 11, with respect to the support 20,40. Said movement will be perceived by the driver acting on the lever 2 as a force-free or tension-free movement in the lever 2. Said distance A is at most approximately 1.0 mm, preferably being approximately 0.5 mm. In the rest position of the automatic tensioning device 10, the unlocking means 50 act on the second regulating element 30, moving it a distance X to the safety position, shown in Figure 13, for the purpose of unlocking the automatic tensioning device 10. A force-free or tension-free movement perceived by the driver when going from the rest position to the block position is thus further minimized. The driver will perceive the movement between the safety position and the block position, which is less than the movement between the rest position and the block position, as a tension-free movement. In the embodiments shown, the distance X travelled by the second regulating element 30 between the rest position and the safety position is approximately 0.5 mm.

Finally, although the parking brake comprising the first embodiment of the automatic tensioning device is only depicted in Figures 1 to 3, said parking brake would be similar in the case of the second and third embodiments of the automatic tensioning device, the description of the elements forming the parking brake provided at the beginning of the disclosure can therefore be extended to the brake comprising the second and third embodiments of the automatic tensioning device.

## Claims

1. An automatic cable tensioning device suitable for parking brakes comprising a support (20,40) suitable for being coupled to a lever (2) of a parking brake (1), a first regulating element (11) suitable for being coupled to the cable, elastic means (13) suitable for regulating the tension of the cable, which act on the first regulating element (11), a second regulating element (30) which is housed in the support (20,40), being moved with respect to the support (20,40) between a rest position wherein a relative movement between both regulating elements (11,30) occurs for tensioning the cable and a block position wherein the second regulating element (30) blocks the relative movement between both regulating elements (20,40) **characterized in that** the first regulating element (11) comprises an outer thread (11c) passing through the second regulating element (30), the second regulating element (30) comprises an inner thread (34;34'), a first stop surface (37) for contacting the support (20,40) in the rest position, and at least one stop (38;36';36",34") for contacting the support (20,40) and/or the first regulating element (11) in the block position, the inner thread (34;34') of the second regulating element (30) cooperating with the outer thread (11c) of the first regulating element (11) to move, in the rest position, the first regulating element (11) with respect to the second regulating element (30) towards the elastic means (13) by means of rotation of the second regulating element (30) when the first stop surface (37) of the second regulating element (30) is arranged in contact with a first stop surface (42) of the support (20,40) and the stop (38;36';36",34") of the second regulating element (30) blocking the rotation with respect to the first regulating element (11) in the block position.

2. The automatic cable tensioning device according to the preceding claim, wherein the first stop surfaces (37,42) are substantially planar surfaces.

3. The automatic cable tensioning device according to any of the preceding claims, wherein the first stop surfaces (37,42) have a coefficient of friction not greater than approximately 0.2.

4. The automatic cable tensioning device according to any of the preceding claims, wherein the second regulating element (30) is moved with respect to the support (20,40) a maximum distance (A) of approximately 1.0 mm between the rest position and the block position.

5. The automatic cable tensioning device according to any of the preceding claims, wherein the second regulating element (30) comprises a plurality of radially distributed stops (38) projecting axially, and the support (20,40) comprises radially distributed notches (27), the projections (38) cooperating with the respective notches (27) for blocking the rotation of the second regulating element (30) with respect to the support (20,40).

6. The automatic cable tensioning device according to any of claims 1 to 4, wherein the second regulating element (30) comprises the stop (36') collaborating with an inner surface (26') of the support (20,40) for blocking the rotation of the second regulating element (30), the stop (36') and the inner surface (26') having a coefficient of friction of at least approximately 1.0.

7. The automatic cable tensioning device according to any of claims 4 to 6, wherein the inner thread (34) of the second element (30) is a symmetrical trapezoidal thread.

8. The automatic cable tensioning device according to any of claims 1 to 4, wherein the inner thread (34') of the second element (30) is an asymmetrical trapezoidal thread.

9. The automatic tensioning device according to the preceding claim, wherein the second regulating element (30) comprises a first stop (34") in the inner thread (34'), delimiting a first minimum thread flank angle (D) of approximately 45°, the first stop (34") collaborating with the outer thread (11c) for blocking the rotation of the second regulating element (30) with respect to the first regulating element (11).

10. The automatic tensioning device according to the preceding claim, wherein the support (20,40) comprises a base (25) against the inner surface (26") of which a second stop (36") of the second regulating element (30) abuts, blocking the axial movement.

11. The automatic cable tensioning device according to any of the preceding claims, comprising blocking means (15) for blocking the rotation of the first regulating element (11).

12. The automatic cable tensioning device according to the preceding claim, wherein the blocking means (15) comprise a substantially planar first face (16) extending longitudinally in at least one end (11a), having a substantially circular section, of the first regulating element (11), and a substantially planar second face (17) delimiting a hole (46), having a substantially circular cross-section, and extending longitudinally in at least one end (45) of the support (20,40), the faces (16,17) being arranged facing one another, preventing the rotation of the first regulating element (11) with respect to the support (20,40).

13. The automatic cable tensioning device according to any of the preceding claims, wherein the support (20,40) comprises a first component (20) which is coupled to the lever (2) and a second support (40) fixed to the first component (20), the second support (40) comprising the first stop surface (42), a support surface (44) arranged substantially parallel to the first stop surface (42), on which the elastic means (13) and a cavity (41) delimited by the support surface (44) and the first stop surface (42) sit, the second regulating element (30) being moved in a guided manner along the cavity (41).

14. The automatic cable tensioning device according to any of the preceding claims, wherein the first regulating element (11) passes through the elastic means (13), being coupled to the elastic means (13) through a support element (12) comprising a seat (12a) on which the elastic means (13) are supported.

15. A parking brake comprising an automatic cable tensioning device (10) according to any of the preceding claims.
